# EUROPÄISCHE PATENTSCHRIFT

(11) **EP 0 647 481 B1**
(45) Veröffentlichungstag und Bekanntmachung des Hinweises auf die Patenterteilung: **20.05.1998**
(21) Anmeldenummer: 94113289.6
(22) Anmeldetag: 25.08.1994
(51) Int. Cl.: B09B 3/00

(54) **Verfahren zur Behandlung von Flugasche**
Process for the treatment of fly ash
Procédé pour le traitement de cendre volante

(30) Priorität: 08.10.1993 DE 4334326
(43) Veröffentlichungstag der Anmeldung: 12.04.1995
(73) Patentinhaber: Forschungszentrum Karlsruhe GmbH, 76133 Karlsruhe (DE)
(72) Erfinder: Vogg, Hubert, Prof. Dr., D-76139 Karlsruhe (DE); Wiese, Kurt, D-76297 Stutensee (DE); Hunsinger, Hans, D-76356 Weingarten (DE)
(74) Vertreter: Gottlob, Peter, Dipl. Ing.

(56) Entgegenhaltungen:
- EP-A- 0 405 619
- EP-A- 0 537 694
- CHEMICAL ABSTRACTS, Band 119, Nr. 4, 26. Juli 1993, Columbus, Ohio, USA TSUTSUI, K.; KOTAKE, S.; MAKAMURA, T. et al. "Apparatus for treatment of scrubbing wastewater by electrodialysis" Seite 383, Spalte 1, Nr. 33 731t; & JP-A-05 31 483 (93 31 483)
- CHEMICAL ABSTRACTS, Band 114, Nr. 4, 28. Jänner 1991, Columbus, Ohio, USA ISHIBASHI, N.; KIYOTA, T.; SUGAYA, Y. "New electro- dialysis water splitter system" Seite 524, Spalte 2, Nr. 31 894w; & JP-A-02 131 125 (90 131 125)

## Beschreibung

Die Erfindung betrifft ein Verfahren zur Behandlung von Flugasche gemäß dem Oberbegriff des ersten Patentanspruchs.

Ein solches Verfahren ist in der DE 33 20 466 A1 beschrieben. Danach wird die Flugasche aus dem Rauchgas einer Müllverbrennungsanlage mit Hilfe eines Zyklons oder eines Elektrofilters abgetrennt. Das von der Flugasche befreite Rauchgas wird einer ersten Naßwäsche mit gleichzeitiger Kondensation unterzogen, wobei der Chlorwasserstoff-Anteil des Rauchgases ausgewaschen wird. Das Salzsäurehaltige Waschkondensat der ersten Naßwäsche wird in einem Lösereaktor mit der Flugasche in Kontakt gebracht, wobei eine solche Menge an Waschkondensat eingesetzt wird, daß ein End-pH von ca. 3 eingestellt wird. Hierbei wird ein beträchtlicher Anteil der Schwermetalle in der Flugasche herausgelöst Der verbleibende feste Rückstand wird abgetrennt. Aus der Lösung der Schwermetalle im salzsauren Waschkondensat lassen sich die Schwermetalle z. B. durch Sulfide fällen und abtrennen.

Das Verfahren geht von dem Grundgedanken aus, daß der Kontakt von deponiegelagerter schwermetallhaltiger Flugasche mit saurem Regen durch die Schwermetallauslaugung mit dem salzsäurehaltigen Waschkondensat vorweggenommen wird. Aus der ausgelaugten Flugasche können Schwermetalle durch sauren Regen nur noch in geringem Ausmaß mobilisiert werden, weil die unter den entsprechenden pH-Bedingungen löslichen Schwermetalle bereits zuvor durch das salzsäurehaltige Waschkondensat entfernt wurden. Soll die Flugasche jedoch zur Einbindung in Schlacke in den Verbrennungsofen rezykliert werden, wird eine Schwermetallanreicherung in der Verbrennungsanlage vermieden.

Auch in der DE 41 35 368 A1 wird eine Schwermetallauslaugung von aufbereiteten Filterstäuben mit Salzsäure vorgeschlagen.

Bei einer Untersuchung von Flugasche, die in der beschriebenen Weise mit salzsäurehaltigem Waschkondensat zur Auslaugung der Schwermetalle behandelt wurde, hat sich nun gezeigt, daß außer den an der Flugasche adsorbierten Schwermetallen zugleich auch eine beträchtliche Menge der Flugasche selbst, nämlich 22 %, aufgelöst wird. Dies ist deshalb nachteilig, weil die aus der Flugasche herausgelösten Stoffe im allgemeinen als Sondermüll entsorgt werden müssen. Es liegt im Interesse der Betreiber von Müllverbrennungsanlagen, die Menge an Sondermüll so gering wie möglich zu halten. Insofern fällt eine zusätzliche Menge von 22 % der Flugasche stark ins Gewicht. Außerdem wäre es vorteilhaft, wenn sich der Anteil der aus der Flugasche auslaugbaren Schwermetalle vergrößern ließe.

Der Erfindung liegt daher die Aufgabe zugrunde, bei einem Verfahren der eingangs genannten Art eine Maßnahme vorzuschlagen, mit deren Hilfe einerseits der Anteil an gelöster Flugasche reduziert und andererseits der Anteil an ausgelaugten Schwermetallen vergrößert wird.

Die Aufgabe wird gemäß dem ersten Patentanspruch dadurch gelöst, daß als Säure nicht Salzsäure, sondern Schwefelsäure eingesetzt wird. Überraschenderweise wurde gefunden, daß Salzsäure und Schwefelsäure in Kontakt mit Flugasche deutlich unterschiedlich wirken. Bei der Behandlung von Flugasche mit Schwefelsäure wird nur ca. 4 % des Flugascheanteils aufgelöst. Bei der Behandlung mit Salzsäure lösen sich dagegen ca. 22 % der Flugasche. Deshalb läßt sich erfindungsgemäß die dem Sondermüll zuzuführende Feststoffmenge um ca. 80 % reduzieren. Ein weiterer wesentlicher Vorteil der Behandlung von Flugasche mit Schwefelsäure besteht darin, daß der Anteil der ausgelaugten Schwermetalle nahezu ausnahmslos und zum Teil deutlich erhöht ist.

Beim Betrieb einer Müllverbrennungsanlage ist es unwirtschaftlich, die großen zur Flugaschebehandlung erforderlichen Säuremengen aus externen Quellen zu beziehen. Das eingangs beschriebene Verfahren gemäß der DE 33 20 466 A1 war insbesondere deshalb erfolgreich, weil Säure eingesetzt wurde, die im Rauchgasreinigungsprozeß selbst anfiel. Gemäß dem in Anspruch 2 beschriebenen Verfahren läßt sich auch Schwefelsäure im Rauchgasreinigungsprozeß gewinnen. Mit den Maßnahmen, die in den Ansprüchen 3 und 4 beschrieben sind, kann ein in sich geschlossenes Konzept zur Rauchgasreinigung erstellt werden.

Die Elektrodialyse mit bipolaren Membranen ist an sich Stand der Technik. Die theoretischen Grundlagen und praktische Anwendungen sind in der Veröffentlichung von H. Strathmann, B. Bauer und H. J. Rapp "Better bipolar membranes", Chemtech June 1993, 17-24 beschrieben.

Die Herstellung von NaOH und H₂SO₄ aus Na₂SO₄-Lösungen durch Elektrodialyse mit einer bipolaren Membran ist in der Veröffentlichung "Entwicklung von bipolaren Membranen und ihre technische Nutzung" von H. Strathmann, H. J. Rapp und B. Bauer in Dechema-Monographien Band 125 - VCH Verlagsgesellschaft 1992, Seiten 83 bis 100 beschrieben. Die Autoren schlagen auf Seite 92 vor, die Elektrodialyse zur Abtrennung von Schwefeldioxid oder nitrosen Gasen aus der Abluft von Verbrennungsanlagen, gekoppelt mit einer kontinuierlichen Regeneration der Lauge des Gaswäschers oder zur Spaltung von Natriumsulfat-haltigen Abwasserströmen in konzentrierte Natronlauge und Schwefelsäure zu verwenden. Diese Vorschläge konnten sich in Müllverbrennungsanlagen jedoch nicht durchsetzen, weil für die geringwertige Schwefelsäure kein ausreichender Bedarf bestand; sie wäre daher zumindest teilweise zusätzlich zu entsorgen.

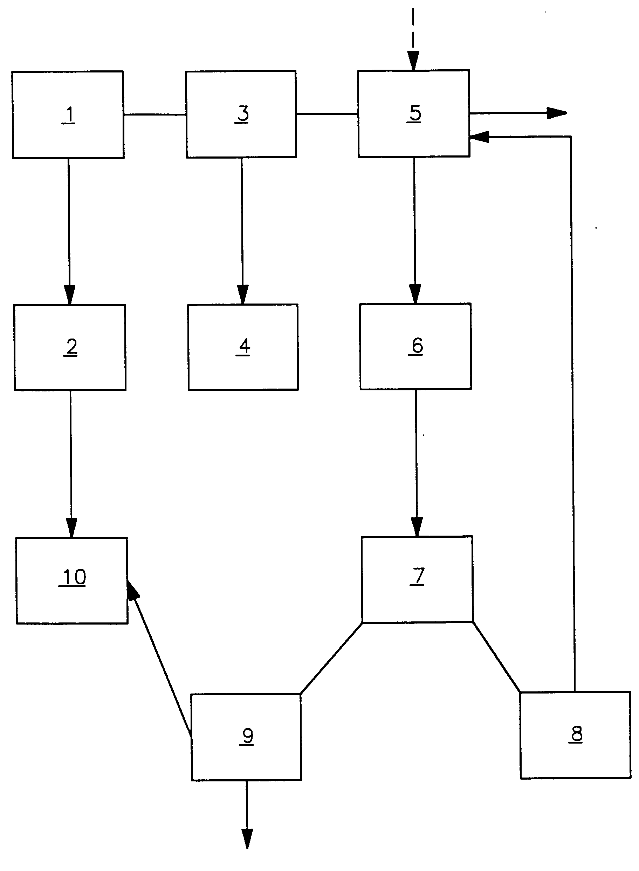

Die Figur zeigt ein optimiertes Prozeßschema für die Rauchgasreinigung einer Müllverbrennungsanlage unter Einschluß des erfindungsgemäßen Verfahrens.

Die Rauchgase werden in eine Entstaubungseinrichtung 1 eingeleitet, in der der Flugstaub 2 abgetrennt wird. Danach werden sie der ersten Naßwäsche 3 zugeführt, in der der Chlorwasserstoff-Anteil und Quecksilber ausgewaschen werden. Die gebildete Salzsäure wird in einer Aufbereitungseinrichtung 4 gesammelt und aufkonzentriert. Im Anschluß an die erste Naßwäsche 3 werden die Rauchgase einer zweiten Naßwäsche 5 unterzogen, die zum Anfahren eine Anfangsmenge an prozeßfremder Natronlauge benötigt. Aus der zweiten Naßwäsche 5 läuft eine Natriumsulfat-Lösung 6 ab, die durch Elektrodialyse an einer bipolaren Membran 7 in Natronlauge 8 und Schwefelsäure 9 zerlegt wird. Die Natronlauge 8 wird in die zweite Naßwäsche 5 rezykliert und ersetzt die Anfangsmenge an prozeßfremder Natronlauge. Die an der bipolaren Membran 7 gebildete Schwefelsäure 9 wird erfindungsgemäß in einem Lösereaktor 10 mit dem Flugstaub 2 in Kontakt gebracht, um die Schwermetalle im Flugstaub auszulaugen. An die zweite Naßwäsche 5 können sich weitere Rauchgasreinigungsschritte anschließen.

In den folgenden Tabellen 1 und 2 werden die Unterschiede bei der Behandlung von Flugasche mit Salzsäure gemäß dem Stand der Technik und mit Schwefelsäure gemäß der Erfindung anhand von Versuchsergebnissen dargestellt. In Tabelle 1 sind die im Filtrat gelösten Anteile von Flugasche in [%] angegeben. Für die wichtigsten an Flugasche adsorbierten Schwermetalle sind in Tabelle 2 die Schwermetallausbeuten in [%] sowohl für das Filtrat als auch für den Rückstand angegeben. Die Daten der Tabelle 2 stellen jeweils Mittelwerte aus 5 verschiedenen Versuchen dar.

Die Behandlung der Flugaschen wurde in allen Fällen in der Weise durchgeführt, daß sich ein End-pH-Wert von 4 einstellte. Die Temperatur bei der Säurebehandlung betrug 50 °C und die Verweilzeit der Flugasche in der Säure 60 min. Der Rückstand wurde anschließend durch Filtration abgetrennt. Filtrat und Rückstand wurden getrennt untersucht.

**Tabelle 1**

| Im Filtrat gelöster Anteil von Flugasche in [%] der Ausgangsmenge | | |
|---|---|---|
| Salzsäure | Schwefelsäure | Differenz |
| 21,70 | 4,00 | 17,70 |
| 22,60 | 4,30 | 18,30 |
| 21,60 | 4,10 | 17,50 |
| 21,80 | 4,80 | 17,00 |
| 22,00 | 4,30 | 17,70 |
| M*⁾ 21,90 ± 0,4 | 4,30 ± 0,30 | 17,60 |

| | | |
|---|---|---|
| M*⁾ = Mittelwert | | |

Aus Tabelle 1 ist zu ersehen, daß bei der Behandlung von Flugasche mit Schwefelsäure eine erheblich geringere Menge von Flugasche aufgelöst wird. Die Prozeßselektivität verbessert sich bei Verwendung von Schwefelsäure zur Behandlung von Flugasche in Anbetracht der höheren Schwermetallausbeuten (Tabelle 2) deutlich.

**Tabelle 2**

| Schwermetallausbeuten in [%] | | | | |
|---|---|---|---|---|
| | Salzsäure | | Schwefelsäure | |
| Schwermetall | Filtrat | Rückstand | Filtrat | Rückstand |
| Cadmium | 78,9 | 20,1 | 86,0 | 14,0 |
| Zink | 44,9 | 55,1 | 60,3 | 39,7 |
| Blei | 0,2 | 99,7 | 1,2 | 98,8 |
| Kupfer | 1,0 | 99,0 | 2,3 | 97,7 |
| Nickel | 7,1 | 92,9 | 13,1 | 86,9 |
| Eisen | 1,1 | 98,9 | 3,9 | 96,1 |
| Mangan | 5,2 | 94,8 | 15,5 | 84,5 |
| Barium | 0,6 | 99,4 | 0,4 | 99,6 |
| Strontium | 23,8 | 76,2 | 5,3 | 94,7 |
| Calcium | 43,7 | 56,3 | 4,2 | 95,8 |

Aus der Tabelle 2 geht hervor, daß bei der Behandlung der Flugasche mit Schwefelsäure die Ausbeuten (der Anteil, der in das Filtrat gelangt) z. T. deutlich erhöht sind. Dies gilt insbesondere für Cadmium, Nickel, Mangan, Blei und Zink. Die Erdalkalimetalle und Blei werden durch die Behandlung mit Schwefelsäure in geringem Maß ausgelaugt. Dabei ist allerdings zu berücksichtigen, daß insbesondere die toxischen Erdalkalimetalle Barium und Strontium sowie Blei bei der Behandlung mit Schwefelsäure erwartungsgemäß in die sehr schwer löslichen Sulfate überführt werden, so daß diese Metalle bei der Deponierung der behandelten Flugasche durch sauren Regen nicht mehr mobilisiert werden können.

## Patentansprüche

1. Verfahren zur Behandlung von Flugasche einer Müllverbrennungsanlage, bei dem
- die Flugasche mit einer solchen Menge einer Säure in Kontakt gebracht wird, daß sich ein pH-Wert von 2 bis 5 einstellt,
- in der Flugasche enthaltene Schwermetalle mit der Säure herausgelöst werden und
- der verbleibende feste Rückstand abgetrennt wird,
dadurch gekennzeichnet, daß
als Säure Schwefelsäure eingesetzt wird.

2. Verfahren nach Anspruch 1,
dadurch gekennzeichnet, daß
Rauchgas einer Müllverbrennungsanlage
- einer ersten Naßwäsche unterzogen wird, in der der Chlorwasserstoff-Anteil des Rauchgases entfernt wird, anschließend
- einer zweiten Naßwäsche unterzogen wird, in der durch Zugabe einer Metallhydroxid-Lösung der Schwefeldioxid-Anteil des Rauchgases entfernt wird, wobei aus der Metallhydroxid-Lösung und dem Schwefeldioxid unter oxidativen Bedingungen eine Metallsulfatlösung erzeugt wird,
- die Metallsulfatlösung einer Elektrodialyse mit einer bipolaren Membran unterworfen wird, wobei die Metallsulfatlösung in die Metallhydroxid-Lösung und Schwefelsäure getrennt wird,
- die Schwefelsäure zur Behandlung der Flugasche eingesetzt wird.

3. Verfahren nach Anspruch 2,
dadurch gekennzeichnet, daß
das Metallhydroxid Natriumhydroxid ist.

4. Verfahren nach Anspruch 2 oder 3,
dadurch gekennzeichnet, daß
die Metallhydroxid-Lösung in die zweite Naßwäsche rezykliert wird.

## Claims

1. Method of treating flue ash of a refuse incinerator, wherein
- the flue ash is brought into contact with such a quantity of an acid that a pH value of between 2 and 5 is set,
- heavy metals contained in the flue ash are eliminated with the acid, and
- the remaining solid residue is separated-out, characterized in that sulphuric acid is used as the acid.

2. Method according to claim 1, characterised in that flue gas of a refuse incinerator
- is subjected to a first wet wash, in which the hydrochloric acid portion of the flue gas is removed, then
- is subjected to a second wet wash, in which, by the addition of a metal hydroxide solution, the sulphur dioxide portion of the flue gas is removed, a metal sulphate solution being produced from the metal hydroxide solution and the sulphur dioxide under oxidation conditions,
- the metal sulphate solution is subjected to an electrodialysis with a bipolar diaphragm, the metal sulphate solution being separated into the metal hydroxide solution and sulphuric acid, and
- the sulphuric acid being used to treat the flue ash.

3. Method according to claim 2, characterised in that the metal hydroxide is sodium hydroxide.

4. Method according to claim 2 or 3, characterised in that the metal hydroxide solution is recycled into the second wet wash.

## Revendications

1. Procédé de traitement des cendres volantes d'une installation d'incinération d'ordures, dans lequel :
• on amène en contact les cendres volantes avec une quantité d'un acide telle qu'une valeur de pH de 2 à 5 s'ajuste,
• on élimine par dissolution les métaux lourds contenus dans les cendres volantes avec l'acide, et
• on sépare le résidu solide qui demeure
caractérisé en ce qu'
on met en oeuvre en tant qu'acide l'acide sulfurique.

2. Procédé selon la revendication 1,
caractérisé en ce que
le gaz de fumée d'une installation d'incinération d'ordures :
• est soumis à un premier lavage humide, dans lequel la quantité de gaz chlorhydrique du gaz de fumée est éliminé, ensuite
• est soumis à un deuxième lavage humide dans lequel par addition d'une solution d'hydroxyde métallique, la quantité d'anhydride sulfureux du gaz de fumée est éliminée, grâce à quoi à partir de la solution d'hydroxyde métallique et de l'anhydride sulfureux on obtient dans des conditions oxydantes une solution de sulfate métallique,
• on soumet la solution de sulfate métallique à une électrodialyse avec une membrane bipolaire grâce à quoi la solution de sulfate métallique est séparée en une solution d'hydroxyde métallique et en acide sulfurique,
• on met en oeuvre l'acide sulfurique pour traiter les cendres volantes.

3. Procédé selon la revendication 2,
caractérisé en ce que
l'hydroxyde métallique est l'hydroxyde de sodium.

4. Procédé selon la revendication 2 ou la revendication 3,
caractérisé en ce que
la solution d'hydroxyde métallique est recyclée dans le deuxième lavage humide.
